(19) **Europäisches Patentamt**

**European Patent Office**

**Office européen des brevets**

(11) **EP 1 494 046 B1**

(12) **EUROPEAN PATENT SPECIFICATION**

(45) Date of publication and mention
of the grant of the patent:
**03.05.2006 Bulletin 2006/18**

(51) Int Cl.:
**G01T 1/29** (2006.01)

(21) Application number: **03405492.4**

(22) Date of filing: **02.07.2003**

(54) **Method and apparatus for coded-aperture imaging**

Verfahren und Vorrichtung zur Abbildung mit kodierter Blende

Procédé et appareil d'imagerie à ouverture codée

(84) Designated Contracting States:
**AT BE BG CH CY CZ DE DK EE ES FI FR GB GR
HU IE IT LI LU MC NL PT RO SE SI SK TR**

(43) Date of publication of application:
**05.01.2005 Bulletin 2005/01**

(73) Proprietor: **Berner Fachhochschule Hochschule
für Technik und
Architektur Biel
2501 Biel (CH)**

(72) Inventor: **Cattin-Liebl, Roger
2540 Grenchen (CH)**

(74) Representative: **Liebetanz, Michael et al
Isler & Pedrazzini AG,
Patentanwälte,
Postfach 6940
8023 Zürich (CH)**

(56) References cited:
**WO-A-81/01952**          **WO-A-02/056055**

- **R. ACCORSI, R. C. LANZA: "Near-field artifact
  reduction in planar coded aperture imaging"
  APPL. OPT. (USA), APPLIED OPTICS, vol. 40, no.
  26, 10 September 2001 (2001-09-10), pages
  4697-4705, XP002255695**
- **R. ACCORSI ET AL.: "A coded aperture for high-
  resolution nuclear medicine planar imaging with
  a conventional Anger camera: experimental
  results " 2001 IEEE NUCLEAR SCIENCE
  SYMPOSIUM CONFERENCE RECORD (CAT. NO.
  01CH37310), 2001 IEEE NUCLEAR SCIENCE
  SYMPOSIUM CONFERENCE RECORD, 4 - 10
  November 2001, pages 1587-1591, XP002255696
  SAN DIEGO, CA, USA**
- **PATT B E ET AL: "A FOURIER-TRANSFORMING
  CODED APERTURE" INTERNATIONAL
  JOURNAL OF IMAGING SYSTEMS AND
  TECHNOLOGY, WILEY AND SONS, NEW YORK,
  US, vol. 4, no. 3, 21 September 1992 (1992-09-21),
  pages 135-147, XP000358338 ISSN: 0899-9457**

**Description**

The invention relates to a method and apparatus for coded-aperture imaging.

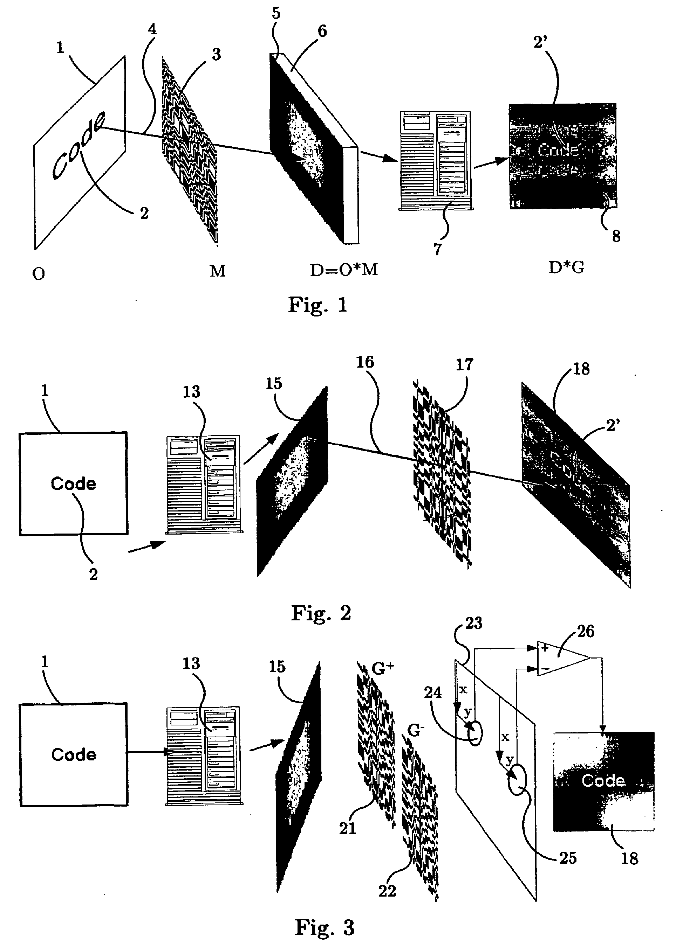

Several coded apertures and applications are known from the prior art. There are many applications of this technique for far field objects. A plurality of gamma and x-ray telescopes integrated in satellites are using such a technique as described in connection with Fig. 1.

WO 02/056055 shows a method and apparatus for the application of said technique to near field objects, especially addressing the problems of near field artifact. Said method is generating a second signal from the near field object obtained through a second coded aperture mask pattern, wherein the second pattern is the "negative" mask of the first image constructing mask.

Another method for use with near field objects is shown in US 4,209,780. This patent publication discloses the use of redundant arrays as coded apertures to improve the transmission characteristics.

WO 81/01952 discloses an apparatus for coded-aperture imaging, where an intermediate convoluted image is decoded by a maskantimask pair similar to WO 02/056055. The coded apertures shown in the different applications according to the prior art are used for coded aperture imaging.

It is an object of the invention to provide a new approach for the optical transport of information from an existing image into an extremely small camera.

This object is achieved with a method having the characteristic features of claim 1.

The invention is based on the insight that a special decoding mask is used similar to the lens of a camera to reconstruct an aperture-coded intermediate image.

This object is achieved with an apparatus having the characteristic features of claim 6.

Further advantageous embodiments are characterized through the features mentioned in the dependent claims.

The invention is now described by way of example on the basis of the accompanying drawings:

Fig. 1   shows a schematic view of the known method of coded-aperture imaging,

Fig. 2   shows a schematic view of the method of coded-aperture imaging according to the invention,

Fig. 3   shows a schematic view of the method of coded-aperture imaging according to the invention with two masks G+ and G-,

Fig. 4   shows a first embodiment of the method of providing masks G+ and G-,

Fig. 5   shows a second embodiment of the method of providing masks G+ and G-,

Fig. 6   shows a third embodiment of the method of providing masks G+ and G-,

Fig. 7   shows a fourth embodiment of the method of providing masks G+ and G-, and

Fig. 8   shows the optical reconstruction of a coded-aperture and geometrically transformed intermediate image.

Fig. 1 shows a schematic view of the known method of coded-aperture imaging. A real object 1 comprises information 2, here the alphanumerical information "code". The real object 1 can be represented by the mathematical object O. A coded-aperture 3 is provided in front of the object 1. The coded-aperture 3 can be represented by the mathematical object M. The representation of the object 1 (white) and the information 2 (black) has been inverted in the Fig. 1 to 3 to avoid printing of a black object surface 1 within a patent document. However, the representations 5, 15, 2' show the intermediate and final results of use of the different methods using a white information 2 on a black background 1.

Light beams, one is shown as arrow 4, generate the image 5. Image 5 is a detector image provided in the plane of an array of detector elements 6. The mathematical object to describe this detector image 5 is the convolution operation $O * M$, wherein "*" denotes the correlation or convolution function.

According to the known techniques a calculation is performed in a computer means 7. Said calculation is a deconvolution, represented as the mathematical object G, giving rise to the decoded image of the object 8, represented by the convolution operation $D * G$. As can be seen, the original information 2, the word "code", is mainly reconstituted as decoded information 2'.

According to the already known applications, the reconstruction $O_{rec}$ of the original Image O from the intermediate aperture coded image D is computed in the computer 7 as the convolution $O_{rec} = D * G$ of the intermediate image D with a decoding mask G. Therefore $O_{rec} = (O * M) * G = O * (M * G) = O * SPSF$, wherein SPSF is the system point spread function. If M and G are chosen such that the SPSF is a $\delta$-function then $O_{rec} = O$ and the reconstruction would be perfect and the decoded information 2' identical to the original information 2.

Fig. 2 shows a schematic view of the method of coded-aperture imaging according to the invention, wherein similar denominations and reference numerals are used for identical or similar features throughout all Fig..

The basis of the method is the information 2 of Fig. 2. However this information is not necessarily an image 1 but can be a virtual object comprising said information, e.g. a computerized and calculated representation of said information 2.

The intermediate image 15 has to be the result of a convolution of an aperture-code and real or virtual objects.

The aperture code is not longer necessarily a coded mask 3 as in the prior art but a mathematical operation conducted by the computer 13. According to one embodiment of the invention the intermediate image 15 may be computed by said computer 13 as the convolution of a virtual image, containing any kind of coded information (here the word "code"), with an aperture-code, or it may be the result of a classical coded-aperture camera, where the position sensitive detector 6 has been replaced by a fluorescent screen. In the latter case the steps of providing an image and convoluting said image to obtain an intermediate image comprise the generation of light, e.g. with sources of X-rays or gamma rays, being projected through an coded aperture on a light emitting screen.

In the first mentioned case the steps of providing an image 1 and convoluting said image 1 to obtain an intermediate image 15 comprise the steps of providing data as a mathematical representation of the image 1 within said computer means 13, calculating the convolution of the image 1 with the mathematical aperture code 3 within the computer means 13 and finally displaying the result as intermediate image 15, e.g. on a computer screen. The advantage of this approach is the use of one single apparatus, a computer means, incorporating all necessary hardware and software modules to generate the information of the image and displaying directly the convoluted result on a screen (or storing them for a representation in another way).

Independently of the kind of element 3 or 13 being used, this intermediate image 15 emits light 16. The light beams 16 are preferably in the visible, infrared or ultraviolet spectrum and can e.g. be displayed by a computer screen. Any other means capable of displaying an illuminated image 15 can be used as intermediate image, for instance a printed image, e.g. a barcode, a slide projector, an overhead projector or a video beamer to name a few.

The invention is using a decoding mask 17 and a geometrical arrangement of the intermediate image 15, decoding mask 17 and photo-detectors 18 as explained in the following paragraphs in respect to the description of Fig. 3 and 4 to 7. It has to be noted that the photo-detectors 18 will be able to reconstitute the original information 2, the word "code", as reconstructed information 2'.

For some families of coded masks like cyclic different sets, modified uniform redundant arrays (MURA's), or m sequences, the decoding mask G may be readily computed from the coding mask M to as G = 2M - 1 (i.e. G = + 1 for M = 1 and G = -1 for M = 0).

As an example, the decoding mask G for the following 5x5 coding mask M (1 means transparent and 0 opaque pixels) looks like:

```
     M                    G
  0  0  0  0  0      -1 -1 -1 -1 -1
  1  1  0  0  1      +1 +1 -1 -1 +1
  1  0  1  1  0      +1 -1 +1 +1 -1          (2.1)
  1  0  1  1  0      +1 +1 -1 -1 +1
  1  1  0  0  1      +1 +1 -1 -1 +1
```

The decoding mask according to the invention realizes the reconstruction convolution $O_{rec} = D * G$ as an optical projection. Because the optical reconstruction requires the use of light and there is no negative light and therefore no possibility to use such negative values, the decoding mask is split into two parts 21 and 22 as can be seen in Fig. 3 to 7.

There is a first part 21 of the mask G+, wherein all positive elements of G are transparent (and therefore this mask is equal to the above shown M). A second part 22 of the mask G- is transparent for the negative elements of G and opaque for the others:

```
    G+              G-

  0 0 0 0 0     1 1 1 1 1

  1 1 0 0 1     0 0 1 1 0

  1 0 1 1 0     0 1 0 0 1                              (2.2)

  1 0 1 1 0     0 1 0 0 1

  1 1 0 0 1     0 0 1 1 0
```

In the process to use these masks 21 and 22 for the actual reconstruction of the original image, both masks 21 and 22 have to be presented to the intermediate image D or 15.

In order to denote positions, two coordinate systems are introduced, each with the origin at the left top 23 of the corresponding mask G+ and G-,respectively, the y-axis pointing to the right and the x-axis pointing down. It has to be noted that this is a free choice and that the coordinate systems can be oriented in a different way and direction in another embodiment.

For every such position (x,y) on both images, a photosensitive detector 24 and 25 respectively, measures the intensity of the light at this position and another device 26 computes the difference of these intensities.

In this way the intensity of the reconstructed image 27 at said position (x, y) is $O_{rec}(x, y) = (D * G)(x, y) = (D * G+)(x, y) - (D * G-)(x,y)$.

If the position of the code depicted in the original image is known, detectors have only to be positioned at the expected positions (x,y) expected of the reconstructed image 27. In the general case, detectors have to be placed at every position of the decoded images. This can be achieved by using a CCD array behind each mask 21 and 22.

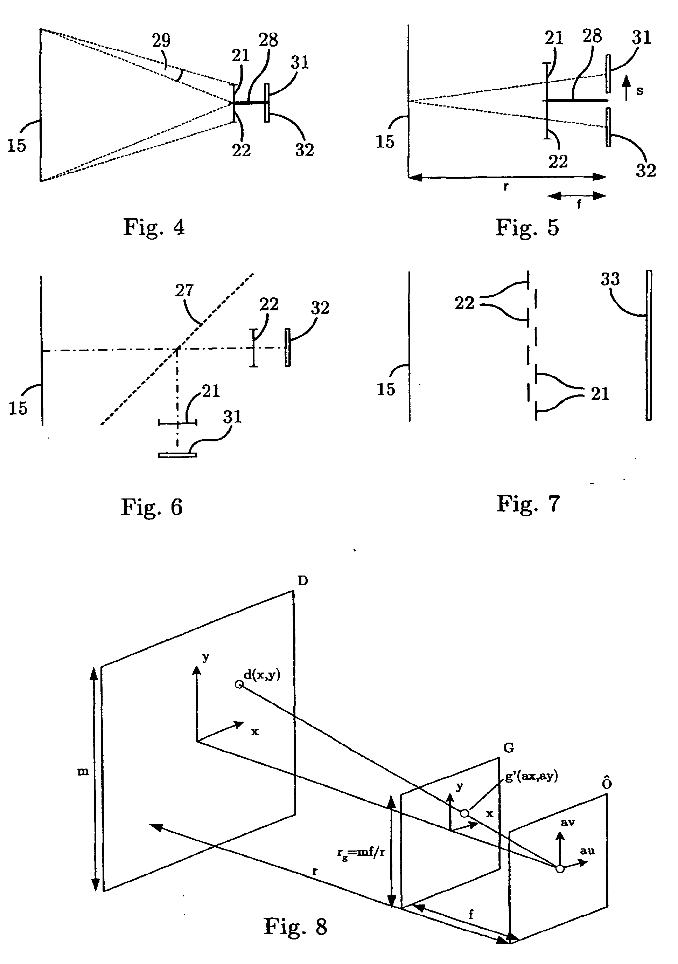

An optical arrangement as shown in Fig. 8 is used to compute the convolution of the intermediate image D and the decoding mask G optically. The intermediate image 15 is assumed to emit light equally in all directions, so that the intensity of the emitted light is assumed to be a two-dimensional function proportional to d(x,y). The light then propagates down the optical axis by some distance r-f, where it encounters the decoding mask with the transmittance g'(ax,ay). The size of the decoding mask G' is smaller than the coding mask G by a factor a = f/r. The ray continues to an observation plane located at f from the decoding mask, arriving there with an intensity of $o = d(x,y) \cdot g'(ax,ay)$. Every ray arriving at the same position contributes to the total intensity

$$O = \int\int_{-\infty}^{\infty} d(x,y) \cdot g'(ax,ay)\ dx\ dy \qquad (2.3)$$

It is assumed that geometric optics may be used, this means that the mask elements have to be large enough to prevent diffraction of the light. Because the pattern of the small mask g'(ax, ay) is a scaled version of the original decoding mask G, this term may be replaced by the transmittance g(x,y) of the original mask. The described integration is done for every point (u,v) of the observation plane, leading to the shift operation required for the computation of the convolution. A shift of (au, av) results in a shift (-au,-av) of the mask. Therefore, if we scale the observation plane:

$$\hat{O}(u,v) = \int\int_{-\infty}^{\infty} d(x,y) \cdot g(x-u,y-v)\ dx\ dy \qquad (2.4)$$

Using the relation that

$$d(x,y) \otimes g(x,y) = f(x,y) \otimes g^*(-x,-y) \qquad (2.5)$$

where $g^*$ denotes the conjugate complex value of $g$, and

$$g^*(-x,-y) = g(-x,-y), \text{ if } g \in \mathcal{R} \qquad (2.6)$$

we get

$$\hat{O}(u,v) = \int\int_{-\infty}^{\infty} d(x,y) \cdot g(u-x,v-y)\, dx\, dy = D \otimes G \qquad (2.7)$$

which is the desired convolution of the intermediate image D with the decoding mask G. Reversing of the axes of $g(x, y)$ according to (2.5) can be achieved by rotating the mask by 180°.

This arrangement can be used for any ratio of the distance $r$ and the focal length $f$. If a coding mask $M$ of size $m$ has been used to generate the intermediate image $D$, the size $rg$ of the decoding mask $G$ becomes

$$rg = \frac{rg \cdot f}{r} \qquad . \qquad (2.8)$$

If one chooses for instance a very small focal length of $f$ = 1 mm, and the size of the coding mask $M$ on a screen to as m = 15 cm, and the distance of the image plane to the screen as r = 15 cm, the size of the reduced mask becomes $rg$ = 1 mm. Like this, we are able to construct a camera consisting of the decoding masks $G^+$ and $G^-$ in front, and the detectors and difference amplifiers in the observation plane, having a size of 2 x 1 x 1 mm.

Both masks G+ and G-, being scaled and rotated by 180 degree, have to be centered in front of the intermediate image in one axe to obtain the best results. In the following, four embodiments for the arrangement of the masks G+ and G- are explained in connection with Fig. 4 to 7.

According to a first embodiment shown in Fig. 4 the reduced decoding masks are constructed very small compared to the size of the intermediate image 15. If the size of a reduced mask becomes smaller than the size of one aperture element in the intermediate image, the error becomes smaller than one element in the resulting picture element (indicated by the small parallactic angle 29 in Fig. 4). Like this, the decoding masks 21 and 22 may be used side by side. An aperture A with the reference numeral 28 prevents the light, that has passed mask G+, to illuminate the detector of the mask G- and vice versa. The masks 21, 22 are at least 10 times smaller than the size of the intermediate image 15.

According to a second embodiment shown in Fig. 5 the reduced coding masks 21 and 22 are arranged side by side and the observation planes with the detectors 31 and 32 are shifted by S = rg r / (r-f) from the centre. An aperture 28 (A) prevents equally that light having passed the mask 21 (G+) would be able to illuminate the detector 32 of mask 22 (G-) and vice versa for the detector 31 of mask 21 (G+).

According to a third embodiment shown in Fig. 6 the intermediate image 15 is presented to both decoding masks by means of a semi transparent mirror 27 operating as a beam splitter.

According to a fourth embodiment shown in Fig. 7 the decoding masks 21 and 22 are color-coded. This means that in one single mask the transparent elements of the mask G+ get the first color and the transparent elements of the mask G- get the second color, i.e. red and green. If the masks 21 and 22 are antimasks one to the other the opaque elements of mask 21 are operating as the transparent elements of the mask 22 and vice versa. This simple form of the masks 21 and 22 can be used by positioning a color sensitive detector 33 as the CCD of a digital color camera or single

**EP 1 494 046 B1**

photosensitive detectors provided with color filters, distinguishing between the two colors. The necessary subtraction can then be computed in a microprocessor or electronically in difference amplifiers 26. The term antimask means that the second mask (the antimask) is associated with a decoding array that is the negative of the decoding array associated with the first mask.

Beside the possibility to use color-coded masking and detection it is possible to use different masking and detection means, i.e. the use of polarization-coded masking and detection. Then the two parts of a mask/antimask transmit light with different polarizations and the detectors are adapted to detect only one of the two polarizations. This can be achieved by using a polarization foil positioned over the detectors, effectively blocking light having the other polarization. The mask/antimask pair can e.g. be formed with two mutually orthogonal linear polarization films or with two different handed circular polarization films.

The implementation of these embodiments can be performed as follows. The decoding mask 21/22 has the features of any film or mask that is transparent on the open elements of the coded mask for the used light (visible or invisible). This enables for the construction of very small decoding apertures, as long as the size of the aperture elements does not become small compared to the wavelength of the light used to avoid diffractional effects.

When visible light is used and a number of 100 times 100 aperture elements are provided on a mask of an area of approximately 1 times 1 millimetre, this is achievable. The corresponding size of the aperture elements of 10 micrometer is about the size of the pixels in conventional CCD of digital cameras. The photo detectors 31, 32, 33 can easily be integrated on silicon, together with the difference amplifiers 26, which allows all together to construct an extremely small camera.

The reconstruction 2' has the usual restrictions already known in the technical field of coded apertures. In particular only images of point sources may be reconstructed with reasonable quality, because there exists no pair of aperture-code and decoding mask with a system point spread function SPSF which is an ideal Dirac peak δ.

The information about the depicted objects is distributed all over the intermediate image. Similar to holograms, the reconstruction is also successful if the decoder sees only a part of the intermediate image. It has been found experimentally that about half the picture is required.

The coded-aperture imaging can be used for optical transmission of data between a screen, e.g. a computer screen, displaying the intermediate image, and a smart-card. The small size of the camera enables the integration of the coded-aperture imaging device within such a smart-card. Therefore the method is e.g. adapted to transmit coded information displayed on a computer screen directly to a smart-card. The decoding masks, positioned one beside the other, can have a size of 1 mm x 2 mm producing two partially reconstructed images 1 mm behind them, where an array of photosensitive detectors are positioned.

The information can also be printed similar to a bar-code, e.g. a two-dimensional code. A receiver camera as mentioned above can be used to reconstruct the original image and to decode the information stored in the spots of the code-image. This can be used as a means of ticket-checking.

Instead of computing the reconstructed image of X-ray or gamma radiation as done in known coded aperture imaging, the intermediate image may directly be decoded optically. The intermediate image can be made visible by a fluorescent screen. This intermediate image can be reconstructed by decoding masks and photosensitive detectors and be presented on a screen. Like this, a handy detector for ionizing radiation may be constructed which does not need any fix computer means.

**Claims**

1. Method of a coded-aperture imaging comprising the steps:

   - Providing an image (1) containing coded information (2),
   - Convoluting said image (1) with an aperture code (3; 13) to obtain a light emitting intermediate image (15), and
   - Subjecting the light (16) emitting intermediate image (15) to decoding mask means (17; 21, 22) to obtain an image (18) on detector means (31, 32; 33),

   **characterized in that** the steps of providing an image (1) and convoluting said image (1) to obtain an intermediate image (15) comprise the steps:

   - Providing data as a mathematical representation of the image (1) within a computer means (13),
   - Calculating the convolution of the image (1) with said aperture code (3) within said computer means (13); and
   - Displaying the result as intermediate image (15).

2. Method according to claim 1, **characterized in that** the decoding mask means (17; 21, 22) comprise two masks (21, 22), wherein one mask (21) acts as the antimask of the other (22).

3. Method according to claim 2, **characterized in that** the masks (21, 22) are positioned one beside the other and **in that** the masks (21, 22) are at least 10 times smaller than the size of the intermediate image (15) or are smaller than the size of one aperture element in the intermediate image (15) or are shifted perpendicular to the optical axis.

4. Method according to claim 2, **characterized in that** the masks (21, 22) receive light emitted from the intermediate image (15) subjected to beam splitter (27).

5. Method according to claim 2, **characterized in that** the transparent elements of one mask (21) are in one color or transmit light with one polarization, **in that** transparent elements of the other mask (22) are in a different color or transmit light with another polarization, wherein the transparent elements of mask (21) are operating as the opaque elements of the mask (22) and the transparent elements of mask (22) are operating as the opaque elements of the mask (21), and **in that** the detector means (31; 32, 33) are color sensitive or polarization sensitive, respectively.

6. Apparatus for coded-aperture imaging comprising:

- computer means (13) provided to generate an intermediate image (15) by convolution on the basis of a mathematical representation of the original image (1), the intermediate image (15) being a light emitting intermediate image (15),
- two masks (21, 22) to be positioned in front of said convoluted light emitting intermediate image (15)
- two detector means (31, 32; 33) arranged to be sensitive for the image information transmitted through one or the other mask (21, 22), and
- data processor means (26) arranged to combine the signals generated by the detector means (31, 32; 33) into a reconstructed image (18).

**Patentansprüche**

1. Verfahren zur Abbildung mit codierter Blende, umfassend die Verfahrensschritte:

- des Lieferns eines Bildes (1), welches die codierte Information (2) enthält,
- des Faltens des besagten Bildes (1) mit einem Blenden-Code (3; 13), um ein Licht-aussendendes Zwischenbild (15) zu erhalten, und
- des Unterwerfens des Licht (16) aussendenden Zwischenbildes (15) gegenüber decodierenden Maskenmittel (17; 21; 22), um ein Bild (18) auf Detektor-Mitteln (31; 32; 33) zu erhalten,

**dadurch gekennzeichnet, dass** die Schritte des Lieferns eines Bildes (1) und des Faltens des besagten Bildes (1), um ein Zwischenbild (15) zu erhalten, die Schritte umfassen:

- das Liefern von Daten als eine mathematische Darstellung des Bildes (1) innerhalb eines Computermittels (13),
- das Berechnen der Faltung des Bildes (1) mit dem besagten Blenden-Code (3) innerhalb der besagten Computer-Mittel (13) und,
- das Anzeigen des Ergebnisses als Zwischenbild (15).

2. Verfahren nach Anspruch 1, **dadurch gekennzeichnet, dass** die Decodiermasken-Mittel (17; 21; 22) zwei Masken (21; 22) umfassen, wobei eine Maske (21) als Anti-Maske der anderen Maske (22) agiert.

3. Verfahren nach Anspruch 2, **dadurch gekennzeichnet, dass** die Masken (21;22) eine neben der anderen positioniert sind und dass die Masken (21;22) mindestens zehn mal kleiner sind als die Grösse des Zwischenbildes (15) oder kleiner sind als die Grösse eines Blenden-Elementes im Zwischenbild (15) oder senkrecht bezüglich der optischen Achse verschoben sind.

4. Verfahren nach Anspruch 2, **dadurch gekennzeichnet, dass** die Masken (21; 22) das von dem Zwischenbild (15) ausgesandte Licht empfangen, aufgeteilt durch einen Strahlteiler (27).

5. Verfahren nach Anspruch 2, **dadurch gekennzeichnet, dass** die transparenten Elemente der einen Maske (21) in einer Farbe sind oder Licht mit einer Polarisation übertragen, dass die transparenten Elemente der anderen Maske (22) in einer verschiedenen Farbe sind oder Licht in einer anderen Polarisation übertragen, wobei die transparenten Elemente der Maske (21) als opake Elemente der Maske (22) wirken und die transparenten Elemente der Maske (22) als opake Elemente der Maske (21) arbeiten, und dass die Erfassungsmittel (31; 32; 33) farbempfindlich beziehungsweise polarisationsempfindlich sind.

**6.** Vorrichtung zur Abbildung mit codierter Blende, umfassend:

- Computer-Mittel (13), welche vorgesehen sind, um ein Zwischenbild (15) durch Faltung auf der Basis einer mathematischen Repräsentation des Original-Bildes (1) darzustellen, wobei das Zwischenbild (15) ein Licht-aussendendes Zwischenbild (15) ist;
- zwei Masken (21; 22), die vor dem besagten gefalteten Licht-ausendenden Zwischenbild (15) zu positionieren sind;
- zwei Detektor-Mittel (31; 32; 33), die so angeordnet sind, um für die Bild-Information, die durch die eine oder die andere Maske (21; 22) übertragen wird, empfindlich ist, und;
- Daten-Verarbeitungsmittel (26), die so angeordnet sind, um die durch die Detektor-Mittel (31; 32; 33) erzeugten Signale in ein rekonstruiertes Bild (18) zu kombinieren.

## Revendications

**1.** Procédé d'imagerie à ouverture codée, comprenant les étapes:

- prévoir une image (1), comprenant de l'information codée (2),
- convoluer ladite image (1) avec un code d'ouverture (3; 13) pour obtenir une image intermédiaire (15) qui émet de la lumière, et
- soumettre l'image intermédiaire (15) émettant de la lumière (16) à des moyens de masque (17; 21; 22) de décodage pour obtenir une image (18) sur des moyens de détection (31; 32; 33),

**caractérisé en ce que** les étapes pour prévoir une image (1) et convoluer ladite image pour obtenir une image intermédiaire (15) comprennent les étapes:

- prévoir des dates en tant que représentation mathématique de l'image (1) à l'intérieur d'un moyen d'ordinateur (13),
- calculer la convolution de l'image (1) avec ledit code d'ouverture (3) à l'intérieur dudit moyen d'ordinateur (13), et
- afficher le résultat en tant qu'image intermédiaire (15).

**2.** Procédé selon la revendication 1, **caractérisé en ce que** les moyens de masque de décodage (17; 21; 22) comprennent deux masques (21; 22), où un masque (21) agit en tant que anti-masque de l'autre (22).

**3.** Procédé selon la revendication 2, **caractérisé en ce que** les masques (21; 22) sont positionnés un à côté de l'autre et **en ce que** les masques sont au moins dix fois plus petits que les dimensions de l'image intermédiaire (15) ou sont plus petit que les dimensions d'un élément d'ouverture dans l'image intermédiaire (15) ou sont déplacés perpendiculairement par rapport à l'axe optique.

**4.** Procédé selon la revendication 2, **caractérisé en ce que** les masques (21; 22) reçoivent de la lumière de la part de l'image intermédiaire (15), soumis au séparateur de faisceau.

**5.** Procédé selon la revendication 2, **caractérisé en ce que** les éléments transparents d'un masque (21) sont dans une couleur ou transmettent de la lumière avec une polarisation, **en ce que** les éléments transparents de l'autre masque (22) sont dans une autre couleur ou transmettent de la lumière dans une autre polarisation, où les éléments transparents du masque (21) travaillent en tant qu'élément opaque du masque (22) et que les éléments transparents du masque (22) opèrent en tant qu'élément opaque du masque (21), et **en ce que** les moyens de détection (31; 32; 33) sont sensibles par rapport à la couleur ou par rapport à la polarisation.

**6.** Appareil pour l'imagerie à ouverture codée, comprenant:

- des moyens d'ordinateur (13) qui sont disposés pour générer un image intermédiaire (15) par convolution sur la base d'une représentation mathématique de l'image originale (1),

où l'image intermédiaire (15) est une image intermédiaire (15), qui émet de la lumière;

- deux masques (21; 22), qui sont à positionner en avant par rapport à l'image convolutée qui émet de la lumière (15);
- deux moyens de détection (31,32,33) arrangés pour être sensibles pour l'information d'image transmise à travers l'une ou l'autre masque (21; 22), et
- des moyens de traitement de données (26), arrangés pour combiner les signaux générés par les moyens de détection (31; 32; 33) dans une image reconstruite (18).

**Fig. 1**

**Fig. 2**

**Fig. 3**

Fig. 4

Fig. 5

Fig. 6

Fig. 7

Fig. 8